## Europäisches Patentamt

## European Patent Office

## Office européen des brevets

(19)

(11) Veröffentlichungsnummer: **0 235 685**
**B1**

(12)

# EUROPÄISCHE PATENTSCHRIFT

(45) Veröffentlichungstag der Patentschrift:
06.09.89

(21) Anmeldenummer: **87102354.5**

(22) Anmeldetag: **19.02.87**

(51) Int. Cl.⁴: **B 25 B 11/00, B 23 Q 3/08**

(54) Hydromechanische Werkzeug- oder Werkstückspannvorrichtung.

(30) Priorität: **24.02.86 DE 3605879**

(43) Veröffentlichungstag der Anmeldung:
**09.09.87 Patentblatt 87/37**

(45) Bekanntmachung des Hinweises auf die Patenterteilung:
**06.09.89 Patentblatt 89/36**

(84) Benannte Vertragsstaaten:
**AT BE CH DE ES FR GB GR IT LI LU NL SE**

(56) Entgegenhaltungen:
**DE-A- 3 001 404**

(73) Patentinhaber: **HEILMEIER & WEINLEIN Fabrik für Oel-Hydraulik GmbH & Co. KG, Neumarkter Strasse 26, D-8000 München 80 (DE)**

(72) Erfinder: **Brunner, Rudolf, Wankstrasse 23, D-8011 Baldham (DE)**

(74) Vertreter: **Patentanwälte Grünecker, Kinkeldey, Stockmair & Partner, Maximilianstrasse 58, D-8000 München 22 (DE)**

ACTORUM AG

**Beschreibung**

Die Erfindung betrifft eine hydromechanische Werkzeug- oder Werkstückspannvorrichtung gemäß dem Gattungsbegriff des Patentanspruchs 1.

Bei einer aus der Praxis bekannten Spannvorrichtung dieser Art ist in der Ablaßleitung ein magnetbetätigtes Sitzventil angeordnet, das zum Lösen den Durchgang der Ablaßleitung absperrt und zum Spannen geöffnet wird. Zur Betätigung des Magneten, der in erregtem Zustand das Sitzventil offenhält, kann ein Druckschaltgerät vorgesehen sein, das auf einen Druck eingestellt ist, der größer ist, als der zum Überwinden der Federkraft erforderliche Druck. Das Magnetsitzventil ist teuer und benötigt einen bestimmen Steuerungsaufwand. Zudem ist in der Löseleitung ein Rückschlagventil erforderlich.

Der Erfindung liegt die Aufgabe zugrunde, eine hydromechanische Werkzeug- oder Werkstückspannvorrichtung der eingangs genannten Art bei gleicher Funktionssicherheit hinsichtlich des Steuerungs- und des baulichen Aufwandes zu vereinfachen.

Die gestellte Aufgabe wird mit den im kennzeichnenden Teil des Patentanspruchs 1 angegebenen Merkmalen gelöst.

Bei dieser Ausbildung ersetzt die einfache, preiswerte und ohne jeglichen Steuerungsaufwand arbeitende Bypaß-Blende das Magnetsitzventil und dessen Steuerung beim Stand der Technik. Für die Bypaß-Blende ist darüber hinaus auch weniger Einbauraum erforderlich. Ein Rückschlagventil in der Löseleitung ist ebenfalls entbehrlich. Zum Spannen wird bei ausgeschalteter Pumpe eventuell in der Löseleitung oder im Federspannzylinder enthaltener Druck über die Blende auf Null abgebaut. Die Federkraft kommt ungehindert zur Wirkung. Beim Lösen baut die Pumpe trotz der Wirkung der Bypaß-Blende den zum Überwinden der Federkraft notwendigen Druck auf, da der Durchflußwiderstand der Bypaß-Blende größer als der zum Überwinden der Federkraft erforderliche Druck ist. Es fließt zum Lösen ein Teil des von der Pumpe mit im wesentlichen konstanter Fördermenge geförderten Druckmittels durch die Bypaß-Blende ab; der andere Teil baut den die Federkraft überwindenden Druck im Federspannzylinder auf. Das beim Lösen über die Bypaß-Blende abströmende Druckmittel wirkt sich in der Praxis nicht nennenswert aus. Der geringfügige Mehraufwand, den die Pumpe wegen des über die Bypaß-Blende abströmenden Druckmittels braucht, bedeutet nur einen Bruchteil des Mehraufwandes, der bei der bekannten Lösung für das Magnetventil und dessen Steuerung benötigt wurde.

Eine besonders einfache Ausführungsform geht aus Anspruch 2 hervor. Solche fest eingestellten Blenden sind in kleinbauenden, preiswerten Baureihen im Handel erhältlich.

Zweckmäßig ist ferner die Ausführungsform von Anspr. 3, weil auf diese Weise das Ansprechverhalten wünschenswert verändert werden und auch eine Anpassung an die jeweilige Federkraft bzw. Federspannzylindergröße vorgenommen werden kann.

Baulich einfach ist auch die Ausführungsform von Anspr. 4 weil durch Auswechseln eines Blendeneinsatzes eine Anpassung der Vorrichtung an geänderte Bedingungen leicht möglich ist. Schließlich ist auch die Ausführungsform von Anspr. 5 zweckmäßig, weil das Druckbegrenzungsventil in an sich üblicher Weise das hydraulische System vor einer Überlast schützt.

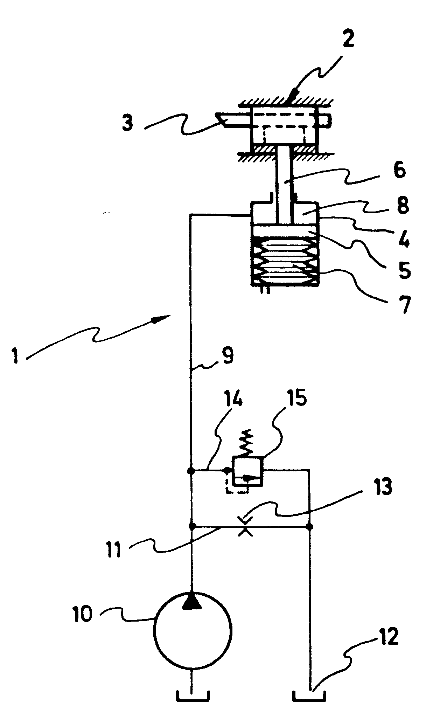

Anhand der Zeichnung, in der eine Ausführungsform einer hydromechanischen Werkzeug- oder Werkstückspannvorrichtung schematisch gezeigt ist, wird der Erfindungsgegenstand nachstehend erläutert.

Eine hydromechanische Werkzeug- oder Werkstückspannvorrichtung 1, die nur schematisch dargestellt ist, besitzt beispielsweise einen Spannkörper 2 für ein Werkzeug oder ein Werkstück 3, das im Spannkörper 2 mittels eines Federspannzylinders 4 leicht austauschbar festlegbar ist. Der Federspannzylinder 4 enthält einen Kolben 5, der über eine Kolbenstange 6 in den Spannkörper 2 eingreift. In Spannrichtung wird der Kolben 5 durch ein Tellerfederpaket 7 beaufschlagt, das für die Erzeugung der erforderlichen Spannkraft sorgt. An der dem Tellerfederpaket 7 gegenüberliegenden Seite des Kolbens 5 ist im Federspannzylinder 4 eine Kammer 8 vorgesehen, die an eine Löseleitung 9 angeschlossen ist, die aus einer nur zum Lösen zuschaltbaren Pumpe 10 mit im wesentlichen konstanter Fördermenge versorgt wird. Von der Löseleitung 9 zweigt zwischen Pumpe 10 und Federspannzylinder 4 eine Ablaßleitung 11 zu einem Tank 12 ab, in der als Ablaßsteuerorgan 13 eine Bypaß-Meßblende angeordnet ist. Die Bypaß-Meßblende kann auf einen festen Durchflußwiderstand eingestellt sein; denkbar ist jedoch auch eine verstellbare Bypaß-Blende oder eine Bypaß-Blende mit austauschbaren Blendeneinsätzen für unterschiedliche Durchflußwiderstände.

Zweckmäßigerweise ist parallel zur Ablaßleitung 11 eine weitere Ablaßleitung 14 von der Löseleitung 9 zum Tank 12 geführt, in der ein Druckbegrenzungsventil 15 angeordnet ist, das den Systemdruck überwacht. Die hydromechanische Werkzeug- oder Werkstückspannvorrichtung 1 arbeitet wie folgt:

Zum Spannen des Werkstücks oder Werkzeugs 3 bleibt die Pumpe 10 abgeschaltet. Eventuell in der Löseleitung 9 oder in der Kammer 8 herrschender Druck baut sich über die Bypaß-Blende 13 auf Null ab. Die Federkraft des Tellerfederpakets 7 kommt ungehindert zur Wirkung.

Zum Lösen wird die Pumpe 10 zugeschaltet. Da der Durchflußwiderstand bzw. die Druckdifferenz der Bypaß-Blende 13 größer gewählt ist als der zum Überwinden der Federkraft des Tellerfederpakets 7 erforderliche Druck, baut die Pumpe 10 in der Löseleitung den erforderlichen Druck auf, mit dem der Kolben 5 das Tellerfederpaket 7 zusammendrückt und die Kolbenstange 6 aus dem Spannkörper 2 herauszieht. Das Werkzeug oder Werkstück 3 kann herausgenommen werden. Das dabei über die Bypaß-Blende 13 abfließende Druckmittel hat darauf keinen Einfluß. Sollte aus einem unvorhersehbaren Grund der Systemdruck über einen bestimmten Wert steigen, der größer ist, als der zum Lösen erforderliche Druck, so öffnet das Druckbegrenzungsventil 15 und hält den Druck in der Löseleitung auf einem vorbestimmten für die Vorrichtung unschädlichen Wert.

Zum neuerlichen Spannen wird die Pumpe abgeschaltet, worauf das Druckmittel aus der Löseleitung 9 und aus der Kammer 8 des Federspannzylinders 4 über die Bypaß-Blende 13 abströmt, bis das Tellerfederpaket 7 über die Kolbenstange 6 das Werkzeug oder Werkstück 2 wieder festspannt.

In der Praxis hat sich für einen Federspannzylinder 4, für den zum Lösen ein Druck von 80 Bar ausreicht, eine Hydraulikpumpe 10 mit einer Förderleistung von 1 l/min bewährt, wobei die Bypaß-Blende 13 einen Durchmesser von 0,5 mm hat und das Druckbegrenzungsventil 15 auf eine Druckgrenze von 100 Bar eingestellt ist.

Die Spannvorrichtung arbeitet deshalb besonders einfach, weil zum Spannen bzw. Lösen nur die Pumpe ab- bzw. angestellt zu werden braucht. Eine zusätzliche Steuerung entfällt.

## Patentansprüche

1. Hydromechanische Werkzeug- oder Werkstückspannvorrichtung, insbesondere für eine Werkzeugmaschine, mit wenigstens einem Federspannzylinder (4), der an eine Löseleitung (9) angeschlossen und gegen Federkraft in eine Lösestellung bringbar ist, mit einer zum Lösen zuschaltbaren Pumpe (10) mit im wesentlichen konstanter Fördermenge in der Löseleitung (9), von der zwischen der Pumpe (10) und dem Federspannzylinder (4) eine Ablaßleitung (11) zum Tank (12) führt, in der ein Ablaßsteuerorgan (13) angeordnet ist, über das zum Spannen bei abgestellter Pumpe (10) das Druckmittel aus dem Federspannzylinder (4) zum Tank (12) abgelassen wird, dadurch gekennzeichnet, daß das Ablaßsteuerorgan (13) eine Bypaß-Blende ist, deren Durchflußwiderstand bei der konstanten Fördermenge der Pumpe (10) größer als der beim Lösen zum Überwinden der Federkraft erforderliche Druck ist.

2. Hydromechanische Werkzeug- oder Werkstückspannvorrichtung nach Anspruch 1, dadurch gekennzeichnet, daß die Bypaß-Blende fest eingestellt ist.

3. Hydromechanische Werkzeug- oder Werkstückspannvorrichtung nach Anspruch 1, dadurch gekennzeichnet, daß die Bypaß-Blende als verstellbare Blende ausgebildet ist.

4. Hydromechanische Werkzeug- oder Werkstückspannvorrichtung nach den Ansprüchen 1 und 3, dadurch gekennzeichnet, daß in die Bypaß-Blende Blendeneinsätze mit verschiedenen Durchflußwiderständen wahlweise einsetzbar sind.

5. Hydromechanische Werkzeug- oder Werkstückspannvorrichtung nach wenigstens einem der Ansprüche 1 bis 4, dadurch gekennzeichnet, daß in einer weiteren zur Ablaßleitung (11) parallelen Ablaßleitung (14) ein Druckbegenzungsventil (15) eingesetzt ist, dessen Grenzdruck größer als der beim Lösen zum Überwinden der Federkraft erforderliche Druck und auch größer als die Druckdifferenz über die Bypaß-Blende ist.

## Claims

1. A hydromechanical tool or workpiece clamping device, more particularly for a machine tool, comprising at least one spring clamping cylinder (4) which is connected to a release line (9) and is adapted to be brought into a release position against spring force, comprising a pump (10) which can be actuated for the release operation and which has a substantially constant delivery in the release line (9), from which a discharge line (11) leads off between the pump (10) and the spring clamping cylinder (4) to a tank (12) in which a discharge control member (13) is disposed, via which for the clamping operation with the pump (10) shut off the pressure medium is discharged from the spring clamping cylinder (4) to the tank (12), characterised in that the discharge control member (13) is a bypass restrictor, the flow resistance of which at the constant delivery of the pump (10) is greater than the pressure required to overcome the spring force on the release operation.

2. A hydromechanical tool or workpiece clamping device according to claim 1, characterised in that the bypass restrictor is set to a fixed adjustment.

3. A hydromechanical tool or workpiece clamping device according to claim 1, characterised in that the bypass restrictor is constructed as an adjustable restrictor.

4. A hydromechanical tool or workpiece clamping device according to claims 1 and 3, characterised in that restrictor inserts having different flow resistances are adapted to be optionally inserted into the bypass restrictor.

5. A hydromechanical tool or workpiece clamping device according to at least one of claims 1 to 4, characterised in that another discharge line (14) parallel to the discharge line (11) contains a pressure limiting valve (15) the critical pressure of which is greater than the pessure required to overcome the spring force in the release operation and is also greater than the pressure difference across the bypass restrictor.

## Revendications

1. Dispositif de serrage hydromécanique pour outils ou pièces à usiner, en particulier pour une machine-outil, équipé d'au moins un vérin de serrage à ressort (4) qui est raccordé à un conduit de desserrage (9) et peut être amené, à l'encontre de la force d'un ressort, dans une position de desserrage, d'une pompe (10) pouvant être mise en marche en vue d'un desserrage et présentant un débit sensiblement constant dans le conduit de desserrage (9) à partir duquel mène, entre la pompe (10) et le vérin de serrage à ressort (4), vers le réservoir (12) un conduit de décharge (11) dans lequel est monté un organe de commande de décharge (13) par l'intermédiaire duquel, en vue d'un serrage à l'état arrêté de la pompe (10), le fluide sous pression est déchargé du vérin de serrage à ressort (4) vers le réservoir (12), caractérisé en ce que l'organe de commande de décharge (13) est un diaphragme à dérivation dont la résistance au passage du fluide, pour le débit constant de la pompe (10), est supérieure à la pression nécessaire lors d'un desserrage pour vaincre la force du ressort.

2. Dispositif de serrage hydromécanique pour outils ou pièces à usiner selon la revendications 1, caractérisé en ce que le diaphragme à dérivation est réglé de manière fixe.

3. Dispositif de serrage hydromécanique pour outils ou pièces à usiner selon la revendication 1, caractérisé en ce que le diaphragme à dérivation est réalisé en tant que diaphragme réglable.

4. Dispositif de serrage hydromécanique pour outils ou pièces à usiner selon la revendication 1 ou 3, caractérisé en ce que dans le diaphragme à dérivation peuvent être montées sélectivement des garnitures de diaphragme présentant des résistances différentes au passage du fluide.

5. Dispositif de serrage hydromécanique pour outils ou pièces à usiner selon l'une quelconque des revendications 1 à 4, caractérisé en ce que dans un second conduit de décharge (14), parallèle au conduit de décharge (11), est monté un limiteur de pression (15) dont la pression limite est supérieure à la pression nécessaire lors d'un desserrage pour vaincre la force du ressort et est également supérieure à la différence de pression à travers le diaphragme à dérivation.